# EUROPEAN PATENT APPLICATION

(11) **EP 3 511 877 A1**
(43) Date of publication of application: **17.07.2019**
(21) Application number: 18185416.7
(22) Date of filing: 19.08.2018
(51) Int. Cl.: G06Q 10/00

(54) **COLLABORATIVE PRODUCT CONFIGURATION OPTIMIZATION MODEL**

(30) Priority: 10.01.2018 IN 201821001181
(71) Applicant: Tata Consultancy Services Limited, Maharashtra (IN)
(72) Inventor: Zhuravel, Mark Alexander, Naperville, IL Illinois 60564 (US); Kulkarni, Devadatta Madhukar, Rochester Hills, MI Michigan 48307 (US); Cooper, Kyle Stephen, Ohio 45150 (US); Tew, Jeffrey David, Rochester, MI Michigan 48306 (US); Jadhav, Sharad Dnyanoba, Auburn Hills, MI Michigan 48326 (US); Kulkarni, Ritesh Ravindra, Troy, MI Michigan 48098 (US); Rajappa, Anandh, 600097 Chennai, Tamil Nadu (IN)
(74) Representative: Goddar, Heinz J.

(57) **Abstract**

A system and method for collaborative product configuration optimization model. A plurality of product families and corresponding one or more product sub-families, a plurality of options families associated with each of the sub-product families is obtained. The option family includes one or more option variants. A first product family from the plurality of product families is selected and the one or more option variants of the first product family is associated with a reference value and is selected based on availability of the one or more option variants. A feasible configuration set for the selected first product family is generated by iteratively performing, for each of a unit of demand, a multi-constrained longest path search traversing across the plurality of option families in an non-increasing order of an average of the reference value of the plurality of the option families and a list of configurations is optimized based on the generated feasible configuration.

## Description

### CROSS-REFERENCE TO RELATED APPLICATIONS AND PRIORITY

This patent application claims priority to Indian Patent Application 201821001181 filed on January 10, 2018.

### TECHNICAL FIELD

The present subject matter relates, in general, to product configuration, and, in particular, to collaborative product configuration optimization model.

### BACKGROUND

Conventionally, methods for forecasting product volumes do not scale well relative to estimating the number of configurations that is the combination of product features that are offered. Typically in early planning process of forecasting product volumes, take rates for features are used to indicate potential number of products that may have specific feature/(s). The early estimates evolve with the product and supply chain design and relative to the overall product volume, these marketing estimates iteratively get challenged by program management, engineering and supply chain teams relative to incremental complexity, costs or supplier capacity constraints. The iterative analyses and results are very difficult to coordinate and implement without cross-functional buy-in partly due to lack of a clear base line. Typically a single feature can be offered using several options in the offering. Estimating right number of parts based upon the product forecast can be extremely complex and tedious task. Methods for optimizing take rates or number of configurations are further complicated by lack of accurate incremental margin or capacity data for a feature, ambiguity in the levels of specificity for describing how and when they together or by themselves will go into an individual configuration, and missing information that provides clear configuration rules specifying engineering or build feasibility.

### SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

In view of the foregoing, embodiments herein provide a systems and methods for providing multi-level data representation of object lifecycle. In one aspect, computer-implemented method executed by a computing device for collaborative product configuration optimization model is provided. The method includes receiving a plurality of product families and corresponding one or more product sub-families, a plurality of options families associated with each of the sub-product families, wherein each of the option family include one or more option variants, selecting a first product family from the plurality of product families, wherein one or more option variants of the first product family is associated with a reference value, and the at least one product family is selected based on availability of the one or more option variants, generating a feasible configuration set for the selected first product family by iteratively performing, for each of a unit of demand, a multi-constrained longest path search traversing across the plurality of option families in an non-increasing order of an average of the reference value of the plurality of the option families, such that total reference value is maximized for the generated feasible configurations respective of the unit of demand; and optimizing a list of configurations for the generated feasible configuration by calculating take rates for each of the option variants and based on one or more constraints.

In another one aspect, a computer-implemented system for collaborative product configuration optimization model is provided. The system includes a memory storing instructions, one or more communication interfaces, one or more hardware processors communicatively coupled to the memory using the one or more communication interfaces, the one or more hardware processors are configured by the instructions to receive a plurality of product families and corresponding one or more product sub-families, a plurality of options families associated with each of the sub-product families, wherein each of the option family include one or more option variants, to select a first product family from the plurality of product families, wherein one or more option variants of the first product family is associated with a reference value, and the at least one product family is selected based on availability of the one or more option variants, to generate a feasible configuration set for the selected first product family by iteratively performing, for each of a unit of demand, a multi-constrained longest path search traversing across the plurality of option families in an non-increasing order of an average of the reference value of the plurality of the option families, such that total reference value is maximized for the generated feasible configurations respective of the unit of demand and optimize a list of configurations for the generated feasible configuration by calculating take rates for each of the option variants and based on one or more constraints.

In yet another aspect, a non-transitory computer-readable medium having embodied thereon a computer program for executing a method for collaborative product configuration optimization model. The method includes receiving a plurality of product families and corresponding one or more product sub-families, a plurality of options families associated with each of the sub-product families, wherein each of the option family include one or more option variants, selecting a first product family from the plurality of product families, wherein one or more option variants of the first product family is associated with a reference value, and the at least one product family is selected based on availability of the one or more option variants, generating a feasible configuration set for the selected first product family by iteratively performing, for each of a unit of demand, a multi-constrained longest path search traversing across the plurality of option families in an non-increasing order of an average of the reference value of the plurality of the option families, such that total reference value is maximized for the generated feasible configurations respective of the unit of demand; and optimizing a list of configurations for the generated feasible configuration by calculating take rates for each of the option variants and based on one or more constraints.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### BRIEF DESCRIPTION OF THE DRAWINGS

The embodiments herein will be better understood from the following detailed description with reference to the drawings, in which:
FIG. 1 illustrates a block diagram for collaborative product configuration optimization model, in accordance with an example embodiment;
FIG. 2 illustrates a flow diagram of the optimization model of system FIG. 1, in accordance with an example embodiment;
FIG. 3 illustrates an flow chart for generating a feasible configuration, in accordance with an example embodiment;
FIG. 4 illustrates a flow chart collaborative product configuration optimization model, in accordance with an example embodiment.

### DETAILED DESCRIPTION

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The collaborative product configuration optimization model may run efficiently to explore the impact of changes in engineering constraints and rules, marketing, supplier or other units, as well as inputs on individual configurations, groups of configurations or complete optimized configuration set or combinations thereof. In an industry various functional teams provide assumptions/inputs into the model, for example, a product and feature demand mix from marketing, margins from finance, supplier capacity from supply chain and configuration rules from engineering and manufacturing. In the present disclosure, a baseline optimal list of configurations is generated, a team can run the model to analyze various under different scenarios. Although several enumeration or heuristic methods for creating a list of feasible configurations exist, such methods do not extend support to users for exploring the optimal revenue or costs scenarios. The present method captures all the required business and configuration rules as well as achieves a set of configurations that deliver optimal revenue or cost. The embodiments disclosed herein focuses on improving the efficiency in generating a feasible configuration in terms of managing complex inputs and speed of generating optimal results. Also, as the number of option families increases, the number of configurations explodes. The present technique further simplifies by selecting only those rules and constraints applicable for selected product families and option families and being sensitive to one or more changes from various units in an industry.

The present embodiments provides an efficient way of organizing option families and search in a dynamically changing tree structure. It also enables to identify and explore the compounded or individual impact of changes in marketing, supplier, engineering, and manufacturing constraints and rules, as well as inputs on individual configurations, groups of configurations or complete optimized configuration set. Therefore, the present technique is a collaborative configuration planning of the product configuration which is applicable in the different scenarios.

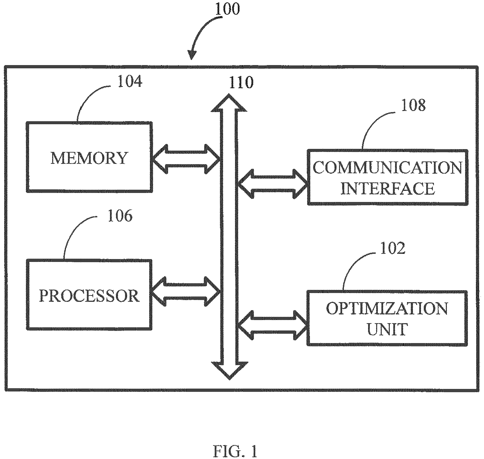

Referring now to the drawings, and more particularly to FIGS. 1 through 4, where similar reference characters denote corresponding features consistently throughout the figures, there are shown preferred embodiments and these embodiments are described in the context of the following exemplary system and/or method.

FIG. 1 is a block diagram of a system 100 for collaborative product configuration optimization model, in accordance with an example embodiment. The system 100 includes an optimizer unit 102 for collaborative product configuration optimization model. The optimizer unit 102 includes or is otherwise in communication with at least one memory such as a memory 104, at least one processor such as a processor 106, and a communication interface 108. The memory 104, processor 106, and the communication interface 108 may be coupled by a system bus such as a system bus 110 or a similar mechanism. Although FIG. 1 shows example components of optimizer unit 102, in other implementations, system 100 may contain fewer components, additional components, different components, or differently arranged components than depicted in FIG. 1.

The at least one processor such as the processor 106 may be implemented as one or more microprocessors, microcomputers, microcontrollers, digital signal processors, central processing units, state machines, logic circuitries, and/or any devices that facilitates in designing polymeric carrier for controlled release of molecules. Further, the processor 106 may comprise a multi-core architecture. Among other capabilities, the processor 106 is configured to fetch and execute computer-readable instructions or modules stored in the memory 104. The processor 106 may include circuitry implementing, among others, audio and logic functions associated with the communication. For example, the processor 106 may include, but are not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits. The processor 106 thus may also include the functionality to encode messages and/or data or information. The processor 106 may include, among other things, a clock, an arithmetic logic unit (ALU) and logic gates configured to support operation of the processor 106. Further, the processor 106 may include functionality to execute one or more software programs, which may be stored in the memory 104 or otherwise accessible to the processor 106.

The memory 104, may store any number of pieces of information, and data, used by the system 100 to implement the functions of the system 100. The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Examples of volatile memory may include, but are not limited to volatile random access memory (RAM). The non-volatile memory may additionally or alternatively comprise an electrically erasable programmable read only memory (EEPROM), flash memory, hard drive, or the like. The memory 104 may be configured to store information, data, applications, instructions or the like for enabling the system 100 to carry out various functions in accordance with various example embodiments. Additionally or alternatively, the memory 104 may be configured to store instructions which when executed by the processor 106 causes the system 100 to behave in a manner as described in various embodiments.

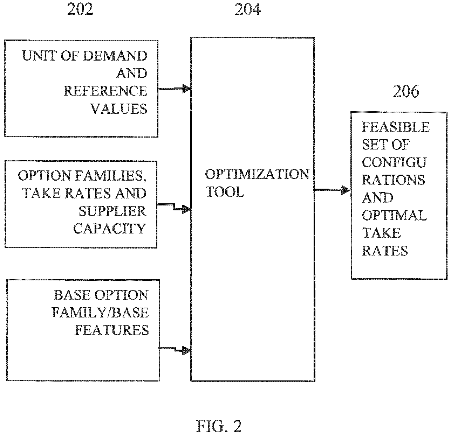

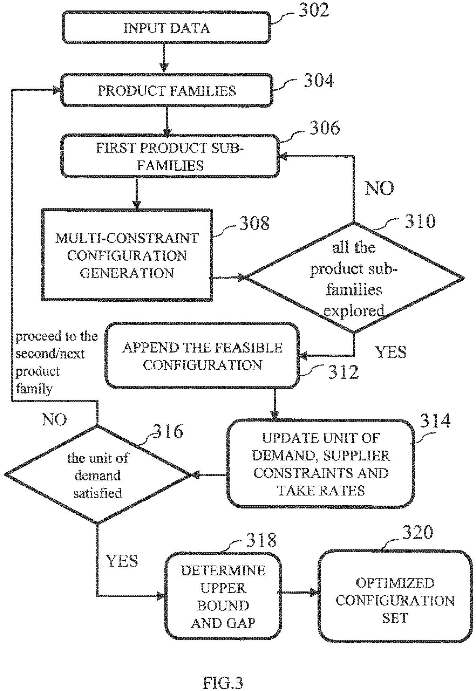

The communication interface(s) 108 can facilitate multiple communications within a wide variety of networks and protocol types, including wired networks, for example, local area network (LAN), cable, etc., and wireless networks, such as Wireless LAN (WLAN), cellular, or satellite. For the purpose, the communication interface (s) 108 may include one or more ports for connecting the design simulation unit 101. One or more functionalities of the system 100 and components thereof, is further explained in detail with respect to FIG. 2 and FIG. 3.

The input parameters for the optimization model includes a plurality of product families and corresponding one or more product sub-families. The input parameters are obtained via one or more database (not shown in figures). For example, the plurality of product families may be a type of car model in an automobile industry and the corresponding product sub-families include different configurations of the car model. And, each of the sub-product families is associated with a plurality of options families. The plurality of option families are specific to a given sub-product family wherein each of the option family include one or more option variants. The plurality of option families are grouped based the one or more option variants and are tagged with option IDs, option code and option name. In an example embodiment, an option family may be predetermined based on the demand unit. The one or more option variant are associated with a reference value. The reference value includes a maximum and minimum value for each of the product sub-families.

In one implementation of system and method for collaborative product configuration optimization model, product configuration is a unique combination of parts from all the product families and each part uniquely belongs to a specific product family. The one or more option variants of a product family is associated with the reference value and a supply constraints. The product configuration optimization model comprehends a unit demand mix, a reference value (upper and lower value associated with each of the option variants) one or more constraints to optimizes the list of configuration. A first product family is selected from the plurality of product families. The at least one product family is selected based on the available one or more option variants. The input (instance data) may collectively include a unit of demand, upper and lower limits associated with the product (reference values), supplier constraints, minimum and maximum take rates and engineering/manufacturing constraints.

The first product family is further based on the one or more constraints. For example, the one or more constraints include base constraints, the base constraints may be, for example, and not limited to, one option variant per option family to be included in each configuration, sum of take rates for each option family should add up to 100%, the total volume of each option variant used cannot exceed supplier capacity, total volume of each option variant used for each product family cannot exceed or be less than specified upper or lower limits and the like. The one or more constraints may further include configuration engineering rules such as a list of available options per each family is specified for each product family, a list of mandatory options is specified for each product family, a list of combinations of mutually required options is specified for each product family, each such option combination can be included into a configuration only as a group and the like.

The one or more constraints may include engineering constraints, manufacturing constraints, market constraints and supply constraints. The one or more constraints are classified into allowed and forbidden constraints. For example, a list of forbidden option combinations that could not be included into a configuration is specified for each product family.

For the selected first product family from the plurality of the product families, a feasible configuration set is generated. The feasible configuration is generated by iteratively performing, for each of a unit of demand, a multi-constrained longest path search traversing across the plurality of option families in an non-increasing order of an average profit margin of the plurality of the option families, such that total profit margin is maximized for the generated feasible configurations respective of the unit of demand. The unit of demand mix is the individual units of the first product family to be configured. For example, a constructive heuristic algorithm procedures are used to incrementally generate multiply-constrained longest paths that represent configurations with an optimal reference value. The first product family is represented as a k-partite directed acyclic graph and the vertices of the graph are grouped into k disjoint sets. Herein, the k disjoint sets represent the plurality of option families and the vertices of each disjoint set represent the one or more option variants associated with each of the option family. The generated feasible configuration is a directed path across k disjoint sets of the vertices of the graph and the length of the path (multi-constrained longest path search) is the sum total of the reference value associated with the vertices.

FIG. 2 illustrates a flow chart for feasible configuration generator and optimization, in accordance with the present disclosure. At 202, input data (problem instance data) includes the unit demand and reference values associated with the one or more option families, business constraints (take rates), configuration constraints (engineering and manufacturing constraints) and base option family engineering (base features which are applicable across all the product families). A feasible configuration is generated at 204, by conducting longest search path such that total reference value is maximized for the generated feasible configurations with respect to the unit of demand. The maximized total reference values across the generated feasible configuration set is calculated based on the engineering constraints, supply constraints and take rates associated with each of the option variants of the first product family. And, the average of the reference value is calculated based on the reference value associated with availability of the one or more option variants for each of the option family. The generation of the feasible configuration is performed by representing the first product family as a k-partite directed acyclic graph and grouping the vertices of the graph into k disjoint sets. The k disjoint sets represent the plurality of option families and the vertices of each disjoint set represent one or more option variants associated with each of the option family. The generated feasible configuration is a directed path across k disjoint sets of the vertices of the graph, and length of the path is the sum total of the reference values associated with the vertices. At 206, the output is generated. The output includes the list of unique configurations with allocated portion of the total product volume that optimize the total margin and includes the count of the number of options needed to produce the corresponding configurations. The method of generating is further described in details with respect to FIG. 3.

FIG. 3 illustrates a flow chart for the method of generating the feasible configuration, in accordance with present disclosure. As describe above, the input data is received from a data base or in one implementation, as a problem instance data from a customer, that is the data for which the feasible configuration is required at step 302. The data received is the problem instance data from the customer for which a feasible (optimal) configuration is sought. A product family is selected from the plurality of product families, say for example, a first product family at 304 and thereby a corresponding one or more product sub-families are selected at 306. Each of the product sub-families are associated with a plurality of option family include and each of such option families include one or more option variants. The one or more option variants is associated with a reference value and the product sub-family is selected based on availability of the one or more option variants.

For each of a unit of demand, a multi-constrained longest path search traversing across the plurality of option families in a non-increasing order of an average of the reference value of the plurality of the option families is executed at 308. The search is executed such that total reference value is maximized for the generated feasible configurations with respect to the unit of demand. In the multi-constraint configuration generation procedure, the first product family is represented as a k-partite directed acyclic graph and the vertices of the graph are grouped into k disjoint sets. The k disjoint sets represent the plurality of option families and the vertices of each disjoint set represent one or more option variants associated with each of the option family. The herein the generated feasible configuration is a directed path across k disjoint sets of the vertices of the graph, and wherein length of the path is the sum total of the reference values associated with the vertices. For example, the sequential processing of option families in the incremental path extension procedures within each configuration may be represented as a directed path across all k disjoint sets of vertices.

The generation method iteratively uses a multi-constrained longest directed path search (in the graph it is the largest sum of node) subroutine to incrementally generate configurations with higher reference value for each unit of demand for each product family. In an implementation, the multi-constrained longest directed path is to find the longest directed path from source to sink subject to various dynamic resource constraints and route constraints. Herein, source may be a starting of a name of a sub-product family, as to what are the options selected and exhausted and sink is the output that is comparing the generated configuration and the optimal margin and the increment additions, if any, across all the families. Thereby, optimization is not only limited to the individually sub-product, but across the families.

Once the search is executed, condition 301 is checked for assessing if all the product sub-families are explored to generate the feasible configuration. If NO, then the process is directed to step 306 to explore all the sub-families of the first product family. If YES, then the feasible configuration is appended at 312. A list of configurations for the generated feasible configuration is optimized by calculating take rates for each of the option variants and based on one or more constraints. The unit of demand, supplier constraints and take rates associated with the first product is updated at 314. Further, a condition if all the unit of demand is satisfied is checked at 316, if yes, then availability of how many option variants is checked and thereby gap between the optimal solutions and the availability (upper bound) of the option variant is determined. In other words, a ball park number is determined before the exit of the loop. If no, then the search is processed to next product family, for example, a second product family at 304 and the process is repeated for the second product family. The multi-constrained longest path search is continued by extending the one or more option variants of the first product family to a second product family from amongst the plurality of product families and dynamically adjusting the supply constraint and estimated take rates for each of the option variants of the first product to generate a feasible configuration set for the second product family. The generated feasible configuration set is updated to the list of configurations and proceed to the subsequent unit of demand of at least one product family from amongst the plurality of product families.

The list of configurations for the generated feasible configuration is optimized by calculating take rates for each of the option variants and based on one or more constraints at step 320. The output includes the list of unique configurations with allocated portion of the total product volume that optimize the total margin and includes the count of the number of options needed to produce the corresponding configurations. The outputs may be used in further analysis which includes analyzing the mix of configurations related to individual margin, take rates achieved for each option variant in a product family and the like.

The search terminates when for each product family, from amongst the plurality of product family associated with a unit of demand, is assigned a feasible configuration. Herein, feasible configuration is with respect to unit of demand.

Furthermore, the generated feasible configuration set with the one or more constraints and rules associated with the first product family is validated. The validation is performed by rechecking if all the rules and constraints are satisfied for each of the configuration and across all generated configurations. Also, the impact of change for the generated feasible configuration at multiple parameters and multiple level of the first product family is analyzed. The tool provides significant cross functional impact to various organizations or departments/unit but not limited to such as finance for increased profitability, engineering on reducing product complexity, to marketing to develop optimal sales packages, to supply chain to eliminate inventory obsolescence in the downstream, to product portfolio management to provide profitable and cost effective products or offerings to market.

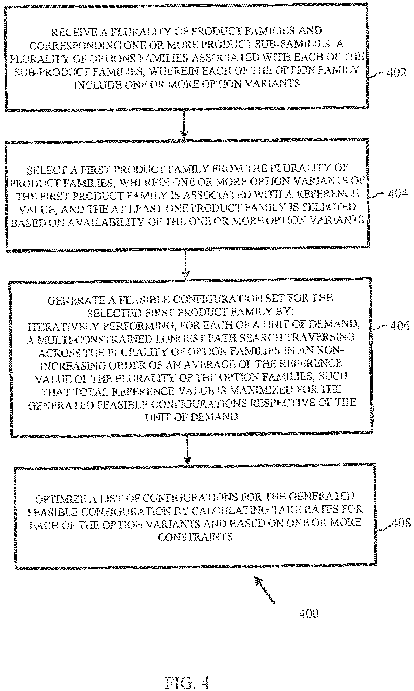

FIG. 4 illustrates a flow diagram of a method 400 for collaborative product configuration optimization model, in accordance with the present disclosure. At block 402, a plurality of product families and corresponding one or more product sub-families and plurality of options families associated with each of the sub-product families is received. Each of each of the option family include one or more option variants. At block, 404, a first product family from the plurality of product families is selected. One or more option variants of the first product family is associated with a reference value and the at least one product family is selected based on availability of the one or more option variants for each of the option family.

At block 406, a feasible configuration set is generated for the selected first product family by iteratively performing, for each of a unit of demand a multi-constrained longest path search traversing across the plurality of option families in a non-increasing order of an average of the reference value of the plurality of the option families. Herein, the unit of demand refers to individual units of the first product family to be configured. The unit of demand is also associated with the supplier capacity, upper and lower limits on the option families as well as the engineering and manufacturing constraints. The longest search path is conducted such that total reference value is maximized for the generated feasible configurations respective of the unit of demand. The maximized total reference values across the generated feasible configuration set is calculated based on the engineering constraints, supply constraints and take rates associated with each of the option variants of the first product family. And, the average of the reference value is calculated based on the reference value associated with availability of the one or more option variants for each of the option family. The generation of the feasible configuration is performed by representing the first product family as a k-partite directed acyclic graph and grouping the vertices of the graph into k disjoint sets. The k disjoint sets represent the plurality of option families and the vertices of each disjoint set represent one or more option variants associated with each of the option family. The generated feasible configuration is a directed path across k disjoint sets of the vertices of the graph, and length of the path is the sum total of the reference values associated with the vertices.

The method further incudes the one or more option variants of the first product family being extended to a second product family from amongst the plurality of product families. The supply constraint and estimated take rates are dynamically adjusted for each of the option variants of the first product to generate a feasible configuration set for the second product family. Thereafter the generated feasible configuration set to the list of configurations is updated and proceed to the subsequent unit of demand of at least one product family from amongst the plurality of product families. Further, the search terminates when for each product family, from amongst the plurality of product family associated with a unit of demand, is assigned a feasible configuration.

Further, at block 408 a list of configurations is optimized for the generated feasible configuration by calculating take rates for each of the option variants and based on one or more constraints. The one or more constraints comprises engineering constraints, manufacturing constraints, market constraints and supply constraints and are classified into allowed and forbidden constraints.

The order in which the in which the method(s) are described is not intended to be construed as a limitation, and any number of the described method blocks can be combined in any order to implement the method 400, or an alternative method. Additionally, individual blocks may be deleted from the methods without departing from the spirit and scope of the subject matter described herein. Furthermore, the method 400 can be implemented in any suitable hardware, software, firmware, or combination thereof.

In an implementation, one or more of the method(s) described herein may be implemented at least in part as instructions embodied in a non-transitory computer-readable medium and executable by one or more computing devices. In general, a processor (for example a microprocessor) receives instructions, from a non-transitory computer-readable medium, for example, a memory, and executes those instructions, thereby performing one or more method(s), including one or more of the method(s) described herein. Such instructions may be stored and/or transmitted using any of a variety of known computer-readable media.

In various embodiments of FIGS. 1- 4, a method and system for collaborative product configuration optimization model is disclosed. The method provides a collaborative way of driving optimal product configurations in terms of revenue or cost by taking the constraints from engineering and sales (configuration rules), along with marketing (take rates), supply chain (supply capacity) is accounted for, all at the same time to demonstrate the overall impact. Further, the present system and method is sensitive changes with respect to constraints provides thereby providing appropriate guidance to various units of an organizations to converge towards desirable result.

The collaborative product configuration optimization model can efficiently run to explore the impact of changes in engineering constraints and rules, marketing, supplier or other units, as well as inputs on individual configurations, groups of configurations or complete optimized configuration set or combinations thereof. The present method captures all necessary configuration rules and focuses on achieving set of configurations that deliver optimal results with respect to the engineering constraints, marketing and finance as well as revenue and cost. The embodiments of the present method significantly improves efficiency of generating a feasible configuration in terms of managing complex inputs and in speed of generating optimal results. Also, as the number of option families increases, the number of configurations explodes. The present technique further simplifies by selecting only of those rules and constraints applicable for selected product families and option families. The present embodiments provides an efficient way of organizing option families and search in a dynamically changing tree structure.

For example, in an automotive industry, a vehicle may include various models and each model may include some features or options available for the particular model. Some or all options/features can be represented as an option family with more than one option variant to select from. However, not every model have every option family available on it. Also, only one option variant from a given option family can be selected in each specific configuration. For example, a vehicle with 3 models viz. A, B, and C and 3 option families, namely, sunroof, wheels, seats are considered as available on the models. Further, each of the option families may include different option variants, for example, sunroofs family may include variants like single and double sunroof; while wheels family may have 18 inch steel, 20 inch steel, 20 inch aluminum, 22 inch aluminum so on and so forth. In an example embodiment, among the product families, however, only some models, viz. B and C, can have all the 3 option families stated above as available and may be configured in any combination of the available option families represented by one of its alternative option variants. Whereas, model A can have only 1 option family (wheels) available represented by 5 alternative option variants with no sunroof and regular cloth seats. In the course of generating incrementally a configuration, the present method processes sequentially each option family and applies all the constraints to select from each option family the best available feasible option variant. In the present example, for each of a unit of demand, a multi-constrained longest path search traversing across the plurality of option families in a non-increasing order of an average of the reference value of the plurality of the option families is performed. The best available feasible option variant is generated such that total reference value is maximized for the generated feasible configurations with respect to the unit of demand. Further, a list of configurations for the generated feasible configuration is optimized by calculating take rates for each of the option variants and based on one or more constraints. As a result, the total product volume to generated set of configurations so as to maximize total margin across the product portfolio satisfying all necessary business and configuration constraints is allocated.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device.

The preceding description has been presented with reference to various embodiments. Persons having ordinary skill in the art and technology to which this application pertains appreciate that alterations and changes in the described structures and methods of operation can be practiced without meaningfully departing from the principle, spirit and scope.

## Claims

1. A computer implemented method comprising:
receiving a plurality of product families and corresponding one or more product sub-families, a plurality of options families associated with each of the product sub-families, wherein each of the option family include one or more option variants;
selecting a first product family from the plurality of product families, wherein one or more option variants of the first product family is associated with a reference value, and the at least one product family is selected based on availability of the one or more option variants;
generating a feasible configuration set for the selected first product family by:
iteratively performing, for each of a unit of demand, a multi-constrained longest path search traversing across the plurality of option families in an non-increasing order of an average of the reference value of the plurality of the option families, such that total reference value is maximized for the generated feasible configurations respective of the unit of demand; and
optimizing a list of configurations for the generated feasible configuration by calculating take rates for each of the option variants and based on one or more constraints.

2. The computer implemented method of claim 1, wherein the generated feasible configuration further comprises:
representing the first product family as a k-partite directed acyclic graph; and
grouping the vertices of the graph into k disjoint sets, the k disjoint sets represent the plurality of option families and the vertices of each disjoint set represent one or more option variants associated with each of the option family, wherein the generated feasible configuration is a directed path across k disjoint sets of the vertices of the graph, and wherein length of the path is the sum total of the reference values associated with the vertices.

3. The computer implemented method of claim 1, wherein the average of the reference value is calculated based on the reference value associated with availability of the one or more option variants for each of the option family.

4. The computer implemented method of claim 1, wherein the one or more constraints comprises engineering constraints, manufacturing constraints, market constraints and supply constraints, and wherein the one or more constraints are classified into allowed and forbidden constraints.

5. The computer implemented method of claim 1, wherein the maximized total reference values across the generated feasible configuration set is calculated based on the engineering constraints, supply constraints and take rates associated with each of the option variants of the first product family.

6. The computer implemented method of claim 1, wherein the unit of demand is comprises individual units of the first product family to be configured.

7. The computer implemented method of claim 1, further comprises validating the generated feasible configuration set with the one or more constraints and rules associated with the first product family.

8. The computer implemented method of claim 1, further comprises analyzing the generated configuration set corresponding to a predefined financial metric associated with the first product family.

9. The computer implemented method of claim 1, further comprises analyzing the impact of change for the generated feasible configuration at multiple parameters and multiple level of the first product family.

10. The computer implemented method of claim 1, further comprising
extending the one or more option variants of the first product family to a second product family from amongst the plurality of product families;
dynamically adjusting the supply constraint and estimated take rates for each of the option variants of the first product to generate a feasible configuration set for the second product family; and
updating the generated feasible configuration set to the list of configurations and proceeding to the subsequent unit of demand of at least one product family from amongst the plurality of product families.

11. The computer implemented method of claim 1, wherein the search terminates when for each product family, from amongst the plurality of product family associated with a unit of demand, is assigned a feasible configuration.

12. A system comprising:
a memory storing instructions;
one or more communication interfaces;
one or more hardware processors communicatively coupled to the memory using the one or more communication interfaces, wherein the one or more hardware processors are configured by the instructions to:
receive a plurality of product families and corresponding one or more product sub-families, a plurality of options families associated with each of the product sub-families, wherein each of the option family include one or more option variants;
select a first product family from the plurality of product families, wherein one or more option variants of the first product family is associated with a reference value, and the at least one product family is selected based on availability of the one or more option variants;
generate a feasible configuration set for the selected first product family by:
iteratively performing, for each of a unit of demand, a multi-constrained longest path search traversing across the plurality of option families in an non-increasing order of an average of the reference value of the plurality of the option families, such that total reference value is maximized for the generated feasible configurations respective of the unit of demand; and
optimize a list of configurations for the generated feasible configuration by calculating take rates for each of the option variants and based on one or more constraints.

13. The system of claim 12, wherein to generate feasible configuration further comprises
representing the first product family as a k-partite directed acyclic graph; and
grouping the vertices of the graph into k disjoint sets, the k disjoint sets represent the plurality of option families and the vertices of each disjoint set represent one or more option variants associated with each of the option family, wherein the generated feasible configuration is a directed path across k disjoint sets of the vertices of the graph, and wherein length of the path is the sum total of the reference values associated with the vertices.

14. The system of claim 12, wherein the at least one processor is capable of executing programmed instructions stored in the at least one memory to:
extend the one or more option variants of the first product family to a second product family from amongst the plurality of product families;
dynamically adjust the supply constraint and estimated take rates for each of the option variants of the first product to generate a feasible configuration set for the second product family; and
update the generated feasible configuration set to the list of configuration and proceeding to the subsequent unit of demand of at least one product family from amongst the plurality of product families.

15. A non-transitory computer storage medium having instructions that, when executed by a computing device cause the computing device to:
receiving a plurality of product families and corresponding one or more product sub-families, a plurality of options families associated with each of the product sub-families, wherein each of the option family include one or more option variants;
selecting a first product family from the plurality of product families, wherein one or more option variants of the first product family is associated with a reference value, and the at least one product family is selected based on availability of the one or more option variants;
generating a feasible configuration set for the selected first product family by:
iteratively performing, for each of a unit of demand, a multi-constrained longest path search traversing across the plurality of option families in an non-increasing order of an average of the reference value of the plurality of the option families, such that total reference value is maximized for the generated feasible configurations respective of the unit of demand; and
optimizing a list of configuration for the generated feasible configuration by estimating take rates for each of the option variants and based on one or more constraints.
